# EUROPÄISCHE PATENTSCHRIFT

(11) **EP 4 130 389 B1**
(45) Veröffentlichungstag und Bekanntmachung des Hinweises auf die Patenterteilung: **13.05.2026**
(21) Anmeldenummer: 22189046.0
(22) Anmeldetag: 05.08.2022
(51) Int. Cl.: E02D 5/80, E02D 33/00, G01L 1/02, G01L 5/24

(54) **KRAFTAUFNEHMER UND GEOTECHNISCHES ANKERSYSTEM**
FORCE TRANSDUCER AND GEOTECHNICAL ANCHOR SYSTEM
TRANSDUCTEURS DE FORCE ET SYSTÈME D'ANCRAGE GÉOTECHNIQUE

(30) Priorität: 06.08.2021 DE 102021120506
(43) Veröffentlichungstag der Anmeldung: 08.02.2023
(73) Patentinhaber: GLÖTZL GESELLSCHAFT FÜR BAUMESSTECHNIK mbH, 76287 Rheinstetten-Forchheim (DE)
(72) Erfinder: Schneider-Glötzl, Joachim, 76199 Karlsruhe (DE); Pudelko, Achim, 76287 Rheinstetten (DE); Kohl, Michael Maria, 75053 Gondelsheim (DE); Zopf, Michael, 76474 Au am Rhein (DE)
(74) Vertreter: Lichti - Patentanwälte Partnerschaft mbB

(56) Entgegenhaltungen:
- EP-A1- 3 770 570
- WO-A1-2018/142102
- AT-B- 348 796
- CH-A5- 682 768
- DE-A1- 102019 211 868
- US-A1- 2007 193 361

## Beschreibung

Die Erfindung betrifft einen Kraftaufnehmer für einen geotechnischen Anker, wobei der Kraftaufnehmer ringförmig ausgebildet und dazu bestimmt ist, den Anker in einer Ebene senkrecht zu einer Längsachse des Ankers zu umgeben.

Weiterhin betrifft die Erfindung ein geotechnisches Ankersystem sowie ein Verfahren zur Kraftmessung bei einem erfindungsgemäßen geotechnischen Ankersystem und ein Verfahren zur Nachrüstung oder zum Austausch einer Kraftmessung bei einem erfindungsgemäßen geotechnischen Ankersystem.

Bei vielen Konstruktionen werden zur Stabilisierung gegen Massenbewegung oder zur dauerhaften Fixierung mit dem Baugrund sogenannte "geotechnische" Anker eingesetzt. Diese Anker stellen eine zugfeste Verbindung zwischen einer zu sichernden Struktur (insbesondere einem Bauwerk) und dem Baugrund (insbesondere Boden oder Fels) her.

Im Wesentlichen unterscheidet man hierbei die Typen Spanndrahtsysteme (Litzenanker), Stabanker und Mikropfähle. In jedem Fall handelt es sich bei den genannten Ankertypen um lang gestreckte Elemente mit einer ausgezeichneten Längsachse. Die Verankerung im Baugrund kann durch Verkeilung oder Spreizung, durch Verklebung oder durch Vermörtelung erfolgen.

Vorliegend werden alle genannten Ankertypen ohne weitere Unterscheidung gemeinsam als "Anker" bezeichnet. Geotechnische Anker können zur temporären Verwendung oder auch für eine dauerhafte Nutzung konzipiert sein. Grundsätzlich unterscheiden sich die Ausführungen der Ankersysteme überwiegend nur in der Dauerhaftigkeit des Korrosionsschutzes. Insbesondere bei Permanentankern und/oder bei sicherheitsrelevanten Einsätzen werden regelmäßig (Kraft-) Messsysteme zur Überwachung vorgesehen.

Zur Messung und Kontrolle derjenigen Kräfte, die bei derartigen Ankern (insbesondere bei Permanentankern) wirken, sind am Markt sogenannte Kraftaufnehmer verfügbar, die im Zuge des Einbaus der Anker installiert werden können. Diese Kraftaufnehmer werden dabei wie eine Unterlegscheibe über den Anker, d.h. den Ankerstab, den Ankerpfahl oder das Ankerseil geschoben und anschließend mit einem sog. Ankerkopf, z.B. einer Ankermutter, einer Verankerungsscheibe oder einem Keilträger, verspannt. Dies ist Stand der Technik und seit Jahrzehnten bekannt.

Beispielsweise ist in der Druckschrift DE 24 39 782 B1 ein solcher Kraftaufnehmer beschrieben. Der vorbekannte Kraftaufnehmer ist ringförmig, speziell kreisringförmig, ausgebildet und dazu bestimmt, den Anker in einer Ebene senkrecht zu einer Längsachse des Ankers vollumfänglich geschlossen zu umgeben.

Die DE102019211868A1 offenbart einen Kraftaufnehmer für einen Anker, wobei der Kraftaufnehmer als einstückiges Ringelement ausgebildet ist und die Sensorik kreissegmentartig um eine mittlere Öffnung verteilt sein kann.

Bei derartigen Kraftaufnehmern bzw. bei geotechnischen Ankern, die mit entsprechenden Kraftaufnehmern ausgestattet sind, ergibt sich ein Problem, wenn der Anker einmal gespannt ist und es nicht möglich oder aus statischen Gründen unzulässig ist, ihn wieder zu entspannen. In solchen Fällen ist es nach dem Stand der Technik nicht mehr möglich, einen Kraftaufnehmer nachträglich zu installieren oder einen bereits montierten Kraftaufnehmer wieder zu demontieren, was beispielsweise bei einem Defekt oder zum Zweck einer Nachrüstung/Nachkalibrierung erforderlich sein kann.

Gerade bei sensiblen oder bedeutenden Bauwerken besteht Interesse und Bedarf an einer nachträglichen Instrumentierung (zur Kraftmessung) bzw. an der Möglichkeit, einen bereits verbauten Kraftaufnehmer in einem zukünftigen Zeitpunkt zu prüfen oder zu ersetzen.

Der Erfindung liegt die Aufgabe zugrunde, einen Kraftaufnehmer für einen geotechnischen Anker anzugeben, der die vorstehend aufgeführten Nachteile vermeidet und bei einem bereits installierten geotechnischen Anker nachrüstbar bzw. austauschbar ist, auch wenn ein Entspannen des Ankers selbst unzulässig oder unmöglich ist.

Der Erfindung liegt auch die Aufgabe zugrunde, ein geotechnisches Ankersystem mit einem entsprechend ausgerüsteten bzw. ausrüstbaren geotechnischen Anker anzugeben. Außerdem sollen Verfahren zur Kraftmessung bei einem geotechnischen Ankersystem bzw. zur Nachrüstung oder zum Austausch einer Kraftmessung bei einem geotechnischen Ankersystem angegeben werden.

Die genannten Aufgaben werden erfindungsgemäß gelöst durch einen Kraftaufnehmer mit den Merkmalen des Patentanspruchs 1, sowie durch ein geotechnisches Ankersystem mit den Merkmalen des Patentanspruchs 7.

Vorteilhafte Weiterbildungen der Erfindung sind in den jeweiligen Unteransprüchen definiert.

Ein erfindungsgemäßer Kraftaufnehmer für einen geotechnischen Anker, welcher Kraftaufnehmer ringförmig ausgebildet und dazu bestimmt ist, den Anker, d.h. den Ankerstab, den Ankerpfahl oder das Ankerseil in einer Ebene senkrecht zu einer Längsachse des Ankers zu umgeben, ist dadurch gekennzeichnet, dass der Kraftaufnehmer über seinen Umfang in wenigstens zwei separate Kraftaufnehmerteile (unterteilt ist), die somit in Form von Ringsektoren ausgebildet sind bzw. sein können.

Wenn der Kraftaufnehmer vorzugsweise kreisringförmig ausgebildet ist, können die Kraftaufnehmerteile die Form von Kreisringsektoren aufweisen. Hierbei handelt es sich um Teilabschnitte eines Rings, die in Umfangsrichtung durch zwei Radiusabschnitte begrenzt sind.

Ein erfindungsgemäßes geotechnisches Ankersystem besitzt neben einem Anker einen erfindungsgemäßen Kraftaufnehmer und ist weiterhin dadurch gekennzeichnet, dass der Kraftaufnehmer in seinem Montagezustand den Anker, d.h. den Ankerstab, den Ankerpfahl oder das Ankerseil in einer Ebene senkrecht zu einer Längsachse des Ankers mit seinen Kraftaufnehmerteilen im Wesentlichen vollumfänglich umgibt.

Der genannte Montagezustand bezeichnet denjenigen Zustand, in dem der Kraftaufnehmer ordnungsgemäß und betriebsgerecht an dem Anker montiert ist, um seiner Kraftmessfunktion gerecht zu werden.

Wenn vorliegend davon die Rede ist, dass der Kraftaufnehmer den Anker mit seinen Kraftaufnehmerteilen "im Wesentlichen" vollumfänglich umgibt, soll dies auch Ausführungen einschließen, bei denen zwischen einzelnen Kraftaufnehmerteilen in der Umfangsrichtung ein gewisser (kleiner) Abstand verbleibt.

Vorliegend wird unterschieden zwischen einem "geotechnischen Ankersystem", welches neben dem Ankerstab, Ankerpfahl oder Ankerseil noch weitere Bestandteile, wie den genannten Kraftaufnehmer, aufweist, und einem "Anker" als solchem, was als Oberbegriff für die genannten Ankertypen (Stab, Pfahl und Seil) zu verstehen ist.

Bei einem ersten Verfahren zur Kraftmessung bei einem erfindungsgemäßen geotechnischen Ankersystem werden zumindest die nachfolgend aufgeführten Verfahrensschritte ausgeführt:
a) Einbringen des Ankers, d.h. eines Ankerstabs, -pfahls oder -seils in einen Baukörper oder Untergrund, sodass der Anker mit einem Ende aus dem Baukörper oder Untergrund herausragt;
b) Anordnen der Kraftaufnehmerteile des Kraftaufnehmers in einer Ebene senkrecht zu einer Längsachse des Ankers um den Anker herum im Bereich des genannten Endes;
c) Verspannen der Kraftaufnehmerteile des Kraftaufnehmers gegen den Baukörper oder Untergrund;
d) Durchführen der Kraftmessung mittels des Kraftaufnehmers.

In Weiterbildung des Verfahrens ist vorgesehen, dass in Schritt c) zunächst die erste Ausgleichsplatte, dann die Kraftaufnehmerteile und zuletzt die zweite Ausgleichsplatte auf dem genannten Ende des Ankers angeordnet und mittels einer Ankermutter gegen den Baukörper oder Untergrund verspannt werden.

Vorzugsweise ist vorgesehen, dass vor Schritt d) die Anzahl der Kraftaufnehmerteile, bevorzugt alle Kraftaufnehmerteile, messtechnisch miteinander verbunden werden.

Bei einem zweiten Verfahren zur Nachrüstung oder zum Austausch einer Kraftmessung bei einem erfindungsgemäßen geotechnischen Ankersystem werden zumindest die nachfolgend aufgeführten Verfahrensschritte ausgeführt:
A) Entfernen oder Lösen einer Verspannsicherung des Ankers gegenüber einem Baukörper oder Untergrund, sodass der Anker an seinem aus dem Baukörper oder Untergrund herausragenden Ende zugänglich wird, vorzugsweise bei entsprechender Ausgestaltung des Verfahrens bzw. des Ankers durch Schaffen einer Beweglichkeit zumindest einer zweiten Ausgleichsplatte relativ zu dem Anker, d.h. einem Ankerstab, -pfahl oder -seil, insbesondere durch Lockern einer Ankermutter;
B) optional zunächst Entfernen der Kraftaufnehmerteile eines vorhandenen Kraftaufnehmers von dem Anker im Wesentlichen in radialer Richtung, anschließend Anordnen der Kraftaufnehmerteile eines vorzugsweise neuen Kraftaufnehmers im Wesentlichen in radialer Richtung in einer Ebene senkrecht zu einer Längsachse des Ankers um den Anker herum im Bereich des genannten Endes;
C) Verspannen der Kraftaufnehmerteile des Kraftaufnehmers gegen den Baukörper oder Untergrund durch erneutes Anbringen oder Anziehen der Verspannsicherung des Ankers.

Vorzugsweise ist vorgesehen, dass während der Schritte A) und B) der Anker durch externe Mittel, insbesondere Hydraulikmittel, temporär gegen eine Bewegung relativ zu dem Baukörper oder Untergrund gesichert wird.

Vorzugsweise wird in Schritt B) ein vorhandener Kraftaufnehmer zunächst entfernt, dann überholt, gewartet und/oder neu kalibriert und anschließend wieder an dem Anker angeordnet wird

Die im Zusammenhang mit dem Verfahren zur Kraftmessung bei einem geotechnischen Ankersystem genannten Merkmale können auch bei dem Verfahren zur Nachrüstung oder zum Austausch eines Kraftaufnehmers bei einem geotechnischen Ankersystem Anwendung finden.

Wenn in Verfahrensschritt B) davon die Rede ist, dass zunächst optional die Kraftaufnehmerteile eines vorhandenen Kraftaufnehmers von dem Anker entfernt werden, betrifft dies den Fall, dass an dem Anker bereits zuvor ein entsprechender Kraftaufnehmer installiert war, der nun zu Wartungszwecken oder zwecks Austausches entfernt werden soll. Das Verfahren schließt jedoch auch Ausgestaltungen mit ein, bei denen ursprünglich kein Kraftaufnehmer an dem Anker installiert war, betrifft also auch die reine Nachrüstung eines bestehenden Ankers, der ursprünglich keine Kraftmesseinrichtung aufwies.

Die Bezeichnung "Baukörper oder Untergrund" wurde vorstehend und wird im Folgenden als Synonym zu den einleitend verwendeten Bezeichnungen "zu sichernde Struktur" bzw. "Baugrund" verwendet.

Wenn hier und im Folgenden von einer "Verspannsicherung des Ankers" die Rede ist, schließt dies insbesondere die bereits aus dem Stand der Technik bekannten Ankermuttern mit ein, die auf das entsprechend mit einem Gewinde ausgestattete freie Ende des Ankers aufgeschraubt werden, um insbesondere den Kraftaufnehmer, regelmäßig aber auch die weiter oben bereits erwähnte(n) Ausgleichsplatte(n) (erste Ausgleichsplatte und zweite Ausgleichsplatte) gegen ein zu sicherndes Bauwerk und dieses wiederum gegen den Baugrund zu verspannen. Die genannte Verspannsicherung sorgt dafür, dass bei ordnungsgemäßem Betrieb keine Relativbewegung zwischen dem Anker, d.h. dem Baugrund und einem zu sichernden Bauwerk stattfindet.

Bei der vorstehend in ihren wesentlichen Grundzügen charakterisierten Entwicklung handelt es sich also um einen geteilten Kraftaufnehmer, der nachträglich und wiedergewinnbar bei geotechnischen Ankern eingesetzt werden kann.

Die Konstruktion des Kraftaufnehmers umfasst mehrere Bauteile, die in dem Montagezustand so um den Anker greifen, dass sie Spannkräfte aufnehmen und auf eine im Zuge einer entsprechenden Weiterbildung der Erfindung vorgesehene, geeignet sensible Messeinheit übertragen. In diesem Zusammenhang spielt das konkrete physikalische Prinzip der Kraftmessung zunächst keine Rolle: jeder Kraftaufnehmer bzw. jede Messeinheit, die in der Lage ist, die genannten Kräfte aufzunehmen bzw. zu messen, kann im Rahmen der vorliegenden Erfindung Verwendung finden.

Eine bevorzugte Ausgestaltung der Erfindung sieht vor, dass die aufgebrachte Ankerkraft über die (Gesamt-) Fläche des Kraftaufnehmers, d.h. die Summe der Flächen der einzelnen Kraftaufnehmerteile in einen hydraulischen Druck umgesetzt wird. Der Kraftaufnehmer selbst kann in diesem Zusammenhang in Form einer in geringem Maße kompressiblen Messeinheit vergleichbar mit einem "Stahlkissen" ausgebildet sein, welches Kissen ein Fluid enthält. Der durch die aufgebrachte Ankerkraft erzeugte Fluiddruck wird bevorzugt mittels eines geeigneten Druckumsetzers erfasst, welcher Druckumsetzer wiederum in verschiedenster Art und Weise ausgebildet sein kann.

Grundsätzlich ist die Erfindung jedoch nicht auf ein auf Kompression beruhendes Messprinzip beschränkt. Alternativ kann die aufgebrachte Ankerkraft beispielsweise auch in Form einer Dehnung erfasst werden, um einen Bezug der Dehnung zur aufgebrachten Kraft abzubilden.

Entsprechend sieht eine andere Weiterbildung des erfindungsgemäßen Kraftaufnehmers vor, dass pro Kraftaufnehmerteil wenigstens eine Messeinheit vorhanden ist, welche Messeinheiten dazu ausgebildet sind, eine Druckeinwirkung auf die betreffende Messeinheit in Form einer Dehnung messtechnisch zu erfassen.

Weiter oben wurde bereits darauf hingewiesen, dass die vorliegende Erfindung keinesfalls auf eine bestimmte physikalische Art der Kraftmessung beschränkt ist. Grundsätzlich kommen noch weitere Formen der Kraftmessung in Betracht, insbesondere Messverfahren elektromechanischer Natur, die dem Fachmann geläufig sind.

Entscheidend ist zunächst lediglich, dass der Kraftaufnehmer, wie bereits ausgeführt wurde, über seinen Umfang in wenigstens zwei separate Kraftaufnehmerteile (Ringsektoren) unterteilt bzw. unterteilbar ist, um ihn auch nachträglich bei einem bereits eingebrachten Anker nachzurüsten bzw. auszutauschen, wenn der Anker nicht entfernt bzw. entlastet werden darf.

Eine erste Weiterbildung des erfindungsgemäßen Kraftaufnehmers sieht vor, dass genau zwei Kraftaufnehmerteile vorhanden sind, die sich jeweils über einen Umfangswinkel von 180 Grad erstrecken, also jeweils gerade den halben Umfang abdecken. Die Erfindung ist jedoch keinesfalls auf eine derart symmetrische Ausgestaltung beschränkt. Grundsätzlich kann es ausreichend sein, wenn einer der Ringsektoren einen inneren Kreisbogen aufweist, dessen Sehne länger ist als der Durchmesser des Ankers.

Allgemein kann vorgesehen sein, dass der Kraftaufnehmer n, n = 1, 2, 3,..., Kraftaufnehmerteile aufweist, die sich jeweils über einen Umfangswinkel von 360/n Grad erstrecken. Wiederum ist die Erfindung jedoch keinesfalls auf Ausgestaltungen beschränkt, bei denen alle Kraftaufnehmerteile gleich ausgebildet sind.

Die Ausgestaltung mit genau zwei Kraftaufnehmerteilen kommt einer möglichst kleinen Anzahl an Einzelteilen aus, die zudem im Wesentlichen identisch ausgebildet sein können, was die Herstellung und die Handhabung erleichtert.

Eine andere Weiterbildung des erfindungsgemäßen Kraftaufnehmers sieht vor, dass eine Anzahl der Kraftaufnehmerteile, bevorzugt alle Kraftaufnehmerteile, messtechnisch miteinander in Wirkverbindung stehen.

Auf diese Weise lässt sich der schaltungstechnische Aufwand für die Kraftmessung reduzieren. Im einfachsten Fall sind alle Kraftaufnehmerteile mit einer einzigen übergeordneten Einheit, beispielsweise dem bereits erwähnten Druckumsetzer, verbunden, sodass der vorrichtungstechnische Aufwand möglichst klein bleibt.

Entsprechend sieht eine äußerst bevorzugte Weiterbildung des erfindungsgemäßen Kraftaufnehmers vor, dass dieser wenigstens einen Druckumsetzer und pro Kraftaufnehmerteil wenigstens eine Messeinheit aufweist, welche Messeinheiten ein Fluid enthalten, dessen Fluiddruck mittels des Druckumsetzers erfassbar ist. Die Messeinheiten können, wie weiter oben bereits beschrieben, in Form von Kissen ausgebildet sein, die das genannte Fluid enthalten. Vorzugsweise sind diese Messeinheiten mit einem einzelnen Druckumsetzer verbunden, um den apparativen Aufwand zu reduzieren.

Es liegt jedoch auch im Rahmen der Erfindung, mehrere Messeinheiten mit jeweils einem eigenen Druckumsetzer auszustatten und anschließend die (elektrischen) Signale der einzelnen Druckumsetzer schaltungstechnisch zu kombinieren.

Im Rahmen einer wieder anderen Weiterbildung des erfindungsgemäßen Kraftaufnehmers kann vorgesehen sein, dass die Messeinheiten der genannten Anzahl an Kraftaufnehmerteilen über wenigstens eine Fluidleitung miteinander und mit dem wenigstens einen Druckumsetzer in Wirkverbindung stehen.

Die Anmelderin hat mit einer solchen Ausgestaltung in der Praxis besonders gute und reproduzierbare Ergebnisse erzielt.

Bei noch einer anderen Weiterbildung des erfindungsgemäßen Kraftaufnehmers hat es sich als vorteilhaft erwiesen, wenn die Fluidleitung an einer jeweiligen Anschlussstelle radial nach außen aus dem betreffenden Kraftaufnehmerteil herausgeführt ist und sich vorzugsweise zwischen zwei Anschlussstellen in einem gleichbleibenden radialen Abstand über einen Abschnitt des Umfangs des Kraftaufnehmers erstreckt. Auf diese Weise ergibt sich ein kompakt bauendes Bauteil, das sich besonders leicht handhaben und einsetzen lässt.

Damit der erfindungsgemäße Kraftaufnehmer bei einem an sich bekannten geotechnischen Anker bzw. in einem gentechnischen Ankersystem einsetzbar ist, sieht eine erste Weiterbildung dieses Ankersystems vor, dass ein Außendurchmesser des Ankers, d.h. ein Außendurchmesser des Ankerstabs, Ankerpfahls oder Ankerseils im Wesentlichen einem lichten Innendurchmesser eines zentralen Durchbruchs des ringförmigen Kraftaufnehmers entspricht. In der Praxis hat es sich als vorteilhaft erwiesen, wenn der Anker bezogen auf seinen Außendurchmesser ein geringes Mindermaß hinsichtlich des genannten Durchbruchs aufweist, um den Kraftaufnehmer bzw. dessen Teile in einfacher Weise um den Anker herum anordnen zu können.

Eine andere Weiterbildung des erfindungsgemäßen geotechnischen Ankersystems sieht vor, dass wenigstens eine bauseitig angeordnete oder anzuordnende erste Ausgleichsplatte und wenigstens eine zweite Ausgleichsplatte vorhanden sind, wie weiter oben bereits erwähnt, welche erste Ausgleichsplatte und/oder welche zweite Ausgleichsplatte vorzugsweise ringförmig ausgebildet ist und jeweils einen zentralen Durchbruch zur Aufnahme des Ankers aufweist, sodass in dem Montagezustand der Kraftaufnehmer mit seinen Kraftaufnehmerteilen zwischen der ersten Ausgleichsplatte und der zweiten Ausgleichsplatte angeordnet ist.

Es wurde bereits darauf hingewiesen, dass vorbekannte Anker bzw. Ankersysteme der hier in Rede stehenden Art in der Regel eine Mutter (Ankermutter) aufweisen, die auf ein passendes Gewinde am freien Ende des Ankers aufgeschraubt wird bzw. aufschraubbar ist, um die gewünschte Ankerwirkung zu erzielen. Die genannte Mutter dient dazu, die genannten Ausgleichsplatten zusammen mit den Kraftaufnehmer gegen das zu sichernde Bauwerk und entsprechend dieses Bauwerk gegen den Baugrund zu verspannen. Eine entsprechende Ausgestaltung kann auch im Rahmen der vorliegenden Erfindung vorgesehen sein.

Eine andere Weiterbildung des erfindungsgemäßen geotechnischen Ankersystems sieht vor, dass wenigstens eine der Ausgleichsplatten, vorzugsweise die zweite Ausgleichsplatte, auf ihrer dem Kraftaufnehmer zugewandten oder zuzuwendenden Seite eine Formschlussstruktur aufweist, welche Formschlussstruktur in dem Montagezustand mit dem Kraftaufnehmer formschlüssig zusammenwirkt. Diese Weise lässt sich eine genaue und reproduzierbare Positionierung des Kraftaufnehmers bzw. der Kraftaufnehmerteile relativ zu der genannten Ausgleichsplatte erreichen. Dies kann die Handhabung bei der Montage erleichtern und Beschädigungen vorbeugen.

Es hat sich als besonders vorteilhaft erwiesen, wenn bei entsprechender Weiterbildung des erfindungsgemäßen geotechnischen Ankersystems der Formschluss in radialer Richtung bezogen auf die Längsachse des Ankers wirksam ist. Zu diesem Zweck kann insbesondere vorgesehen sein, dass die Formschlussstruktur als eine ringförmige Vertiefung in der betreffenden Seite der entsprechenden Ausgleichsplatte ausgebildet ist, welche Vertiefung in dem Montagezustand mit einem komplementären Vorsprung an dem Kraftaufnehmer, vorzugsweise an jedem der Kraftaufnehmerteile, zusammenwirkt, oder umgekehrt.

Auf diese Weise sorgt die Formschlussstruktur dafür, dass die einzelnen Kraftaufnehmerteile geometrisch reproduzierbar zu dem (Gesamt-)Kraftaufnehmer zusammenfügbar sind, ohne dass es zu Ungenauigkeiten bei der relativen Positionierung käme, was die Montage und den ordnungsgemäßen Betrieb beeinträchtigen könnte. Insbesondere die angestrebte (fluidtechnische) Verbindung der einzelnen Kraftaufnehmerteile untereinander wird auf diese Weise erleichtert.

Noch eine andere Weiterbildung des erfindungsgemäßen geotechnischen Ankersystems sieht vor, dass die wenigstens eine der Ausgleichsplatten, vorzugsweise die zweite Ausgleichsplatte, über ihren Umfang an entsprechenden Trennstellen in wenigstens zwei separate Teilsektoren, vorzugsweise Ringteilsektoren, unterteilt ist, welche Teilsektoren sich vorzugsweise jeweils über einen gleichen Umfangswinkelbereich erstrecken. Wie auch bei dem Kraftaufnehmer hat es sich als vorteilhaft erwiesen, wenn genau zwei Teilsektoren vorhanden sind, die jeweils einen Winkelbereich von 180° abdecken; die Erfindung ist jedoch keinesfalls auf eine derartige Ausgestaltung beschränkt - vielmehr kann auch eine andere Anzahl von Teilsektoren verwendet werden, und die Teilsektoren können jeweils unterschiedliche Winkelbereiche abdecken. Durch die Unterteilung der genannten Ausgleichsplatte(n) lässt sich die Montage der erfindungsgemäßen Anordnung vereinfachen.

Um trotz der genannten Unterteilung für eine ausreichende Stabilität zu sorgen, sieht eine weiter bevorzugte Ausgestaltung des erfindungsgemäßen geotechnischen Ankersystems vor, dass die beiden Teilsektoren mittels einer Anzahl von Verbindungsmitteln, vorzugsweise Schraubmitteln, lösbar miteinander verbindbar sind, um die wenigstens eine der Ausgleichsplatten zu bilden. In diesem Zusammenhang kann außerdem noch vorgesehen sein, dass im Bereich der genannten Trennstellen radiale Flanschen vorgesehen sind, welche in dem Montagezustand relativ zueinander fluchtende Durchbrüche aufweisen, durch welche Verbindungsmittel in Form von Schraubbolzen geführt sind oder geführt werden können, um die genannten Teilsektoren lösbar miteinander zu verbinden.

Es hat sich weiterhin als vorteilhaft erwiesen, wenn bei entsprechender Weiterbildung des erfindungsgemäßen geotechnischen Ankersystems wenigstens eine Anzahl der Trennstellen in dem Montagezustand in ihrer Umfangsposition mit jeweils einer Anschlussstelle der Fluidleitung an einem betreffenden Kraftaufnehmerteil zusammenfällt bzw. zusammenfallen. Insbesondere können die vorstehend erwähnten Flanschen oder vergleichbare Verbindungsstrukturen an den Teilsektoren für einen Schutz der Fluidleitung gegenüber äußeren Schadeinwirkungen im Bereich der Anschlussstelle sorgen. Die genannten Anschlussstellen können bei entsprechender Ausgestaltung der Erfindung einander diametral gegenüber liegend angeordnet sein.

Im Zuge einer Weiterbildung des ersten Verfahrens kann außerdem noch vorgesehen sein, dass in Schritt c) zunächst die erste Ausgleichsplatte, dann die Kraftaufnehmerteile und zuletzt die zweite Ausgleichsplatte auf dem genannten Ende des Ankers angeordnet und mittels einer Ankermutter oder dgl. gegen den Baukörper oder Untergrund verspannt werden. Es kann jedoch alternativ auch vorgesehen sein, dass bei entsprechender Ausgestaltung speziell der zweiten Ausgleichsplatte mit der weiter oben angesprochenen Formschlussstruktur und/oder der Unterteilung in Teilsektoren zunächst die Kraftaufnehmerteile mittels der zweiten Ausgleichsplatte zu dem (Gesamt-)Kraftaufnehmer zusammengefügt werden, worauf hin dieser dann gemeinsam mit der zweiten Ausgleichsplatte auf dem Anker angeordnet und dort zusammen mit der ersten Ausgleichsplatte verspannt wird. Speziell die zuletzt genannte Ausgestaltung kann zu einer vereinfachten Montage beitragen, weil weniger Einzelteile zu handhaben sind.

Eine andere Weiterbildung des ersten Verfahrens sieht noch vor, dass vor Schritt d) die Anzahl der Kraftaufnehmerteile, bevorzugt alle Kraftaufnehmerteile, messtechnisch miteinander verbunden werden. Auf diese Weise können vorzugsweise alle Kraftaufnehmerteile zur Kraftmessung beitragen.

Die beiden zuletzt beschriebenen Weiterbildungen des ersten Verfahrens können auch im Rahmen des zweiten Verfahrens zum Einsatz kommen.

Außerdem kann in Weiterbildung des zweiten Verfahrens noch vorgesehen sein, dass während der Schritte A) und B) der Anker durch externe Mittel, insbesondere Hydraulikmittel, temporär gegen eine Bewegung relativ zu dem Baukörper oder Untergrund gesichert wird. Auf diese Weise kann ein erfindungsgemäßer Kraftaufnehmer nachgerüstet oder ausgetauscht werden, ohne dass es zu einer Beschädigung eines zu sichernden Bauwerks kommt.

Die Erfindung ist in diesem Zusammenhang nicht auf bestimmte externe Sicherungsmittel für den Anker beschränkt. Vielmehr können im Rahmen der vorliegenden Erfindung alle Arten von externen Sicherungsmitteln Verwendung finden, die dem Fachmann geläufig sind bzw. werden.

Schließlich kann im Zuge einer anderen Weiterbildung des zweiten Verfahrens vorgesehen sein, dass in Schritt B) ein vorhandener Kraftaufnehmer zunächst entfernt, dann überholt, gewartet und/oder neu kalibriert und anschließend wieder an dem Anker angeordnet wird. Es muss also nicht zwingend ein neuer Kraftaufnehmer zum Einsatz kommen, sofern dies nicht aus sicherheitstechnischen Gründen erforderlich ist.

Weitere Eigenschaften und Vorteile der Erfindung ergeben sich aus der nachfolgenden Beschreibung von Ausführungsbeispielen anhand der Zeichnung.
Figur 1 zeigt einen erfindungsgemäßen Kraftaufnehmer in der Draufsicht mit Blickrichtung entlang einer Längsachse eines (nicht gezeigten) Ankers;
Figur 2 zeigt den Kraftaufnehmer aus Figur 1 in einer perspektivischen Darstellung;
Figur 3 zeigt ein erfindungsgemäßes geotechnisches Ankersystem mit Blickrichtung entlang dessen Längsachse;
Figur 4 zeigt einen Schnitt entlang der Linie A-A in Figur 3;
Figur 5 zeigt einen endgültigen Montagezustand eines erfindungsgemäßen geotechnischen Ankersystems;
Figur 6 zeigt einen ersten Schritt beim Austausch des Kraftaufnehmers ausgehend von dem Montagezustand in Figur 5;
Figur 7 zeigt einen zweiten Schritt beim Austausch des Kraftaufnehmers ausgehend von dem Montagezustand in Figur 5 und
Figur 8 zeigt einen dritten Schritt beim Austausch des Kraftaufnehmers ausgehend von dem Montagezustand in Figur 5.

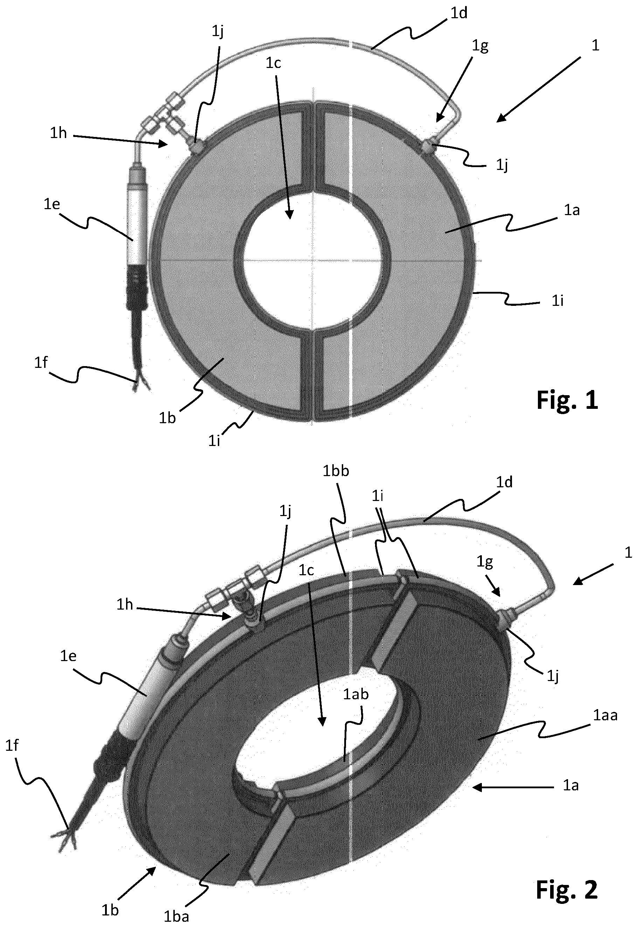

In Figur 1 ist ein erfindungsgemäßer Kraftaufnehmer 1 in einer Draufsicht dargestellt, wobei die Blickrichtung entlang der Längsachse eines (hier nicht gezeigten) Ankers orientiert ist. Der Kraftaufnehmer 1 ist insgesamt kreisringförmig ausgebildet und dazu bestimmt, einen Anker in einer Ebene senkrecht zu der Längsachse des Ankers zu umgeben, welche Ebene vorliegend parallel zur Zeichenebene orientiert ist. Der Kraftaufnehmer 1 ist bei seinem Umfang in zwei separate Kraftaufnehmerteile 1a, 1b unterteilt, die vorliegend als Kreisringsektoren ausgebildet sind und sich jeweils über einen Winkelbereich von 180° erstrecken. Im Zentrum des Kraftaufnehmers 1 ist ein kreisförmiger Durchlass 1c ausgebildet, der zum Durchführen eines Ankers bestimmt ist und einen hierfür geeigneten lichten Innendurchmesser aufweist.

Jedes der Kraftaufnehmerteile 1a, 1b beinhaltet eine Messeinheit bzw. stellt eine Messeinheit dar, welche Messeinheit ein geeignetes Fluid enthält, und ist über eine Fluidleitung 1d mit einem einzelnen Druckumsetzer 1e fluidleitend verbunden. Der Druckumsetzer 1e wandelt ein anstehendes Fluid-Drucksignal in ein elektrisches Signal um, das in an sich bekannter Weise zu Auswertungszwecken weiterverarbeitet werden kann. Entsprechend gehen von dem Druckumsetzer 1e Elektrokabel 1f ab. Die Fluidleitung 1d ist an einer jeweiligen Anschlussstelle 1g, 1h der Kraftaufnehmerteile 1a, 1b radial nach außen aus dem betreffenden Kraftaufnehmerteil 1a, 1b herausgeführt und erstreckt sich zwischen den Anschlussstellen 1g, 1h in einem gleichbleibenden radialen Abstand über einen Abschnitt des Umfangs des Kraftaufnehmers 1.

Entscheidend ist, dass die Kraftaufnehmerteile 1a, 1b nicht unlösbar miteinander verbunden, sondern als separate Bestandteile des Kraftaufnehmers 1 ausgebildet und entsprechend voneinander entfernbar sind, sodass sie insbesondere nachträglich um einen Anker herumlegbar bzw. von einem bereits installierten Anker abnehmbar sind, ohne den Anker selbst entfernen zu müssen.

Wie man insbesondere der perspektivischen Darstellung in Figur 2 entnimmt, umfasst jedes der Kraftaufnehmerteile 1a, 1b zwei Halbschalen 1aa, 1ab; 1ba, 1bb, die jeweils über eine umlaufende Schweißnaht 1i fluiddicht miteinander verbunden sind, sodass zwischen ihnen eine (Druck-) Kammer für das genannte Fluid gebildet ist. Mit dieser Kammer ist die Fluidleitung 1d an den Anschlussstellen 1g, 1h fluidleitend verbunden. Diese Verbindung ist jeweils mittels eines hülsenförmigen Adapters 1j mechanisch stabilisiert. Wenn eine äußere Kraft auf die Halbschalen 1aa, 1ab; 1ba, 1bb einwirkt, ändert sich der Fluiddruck in der Kammer, was durch den Druckumsetzer 1e in ein auswertbares elektrisches Signal umgewandelt wird. Dies ist dem Fachmann an sich bekannt; die vorliegende Erfindung ist jedoch grundsätzlich nicht auf dieses Messprinzip beschränkt.

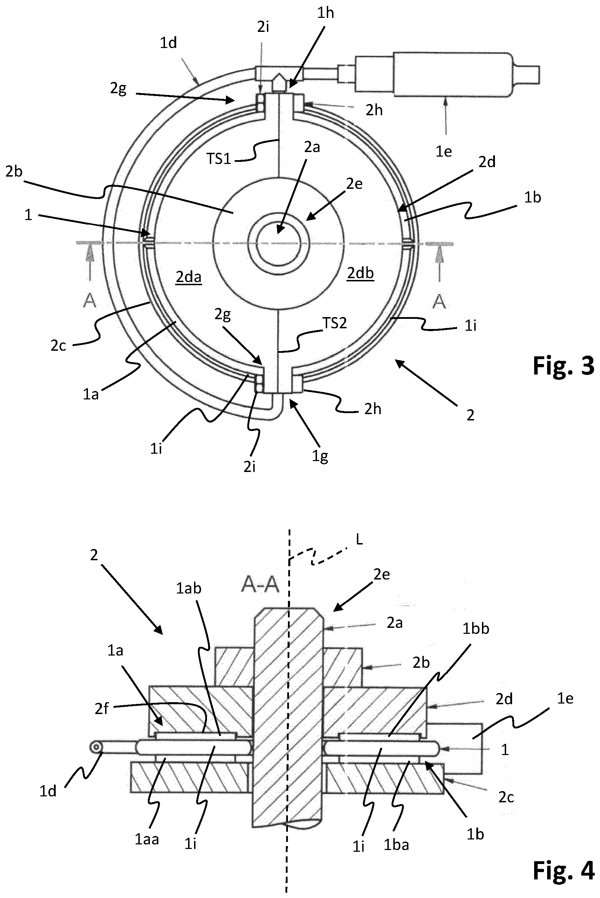

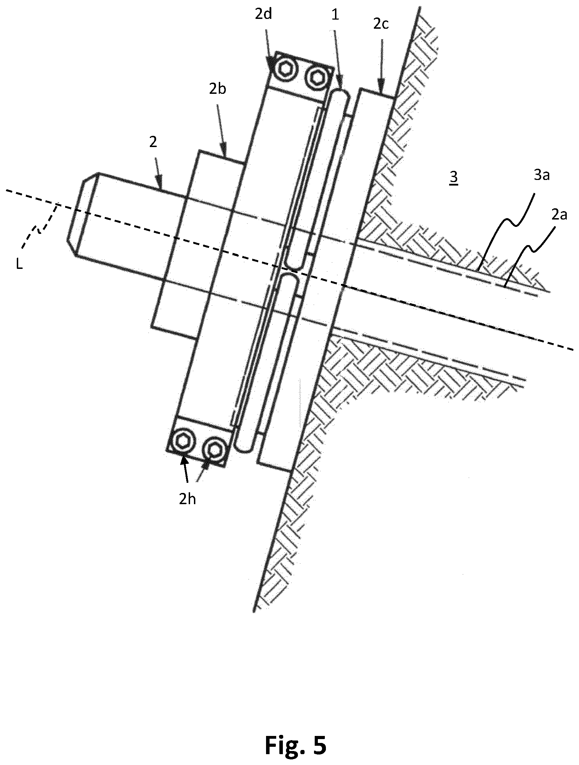

In Figur 3 ist eine der Figur 1 ähnliche Darstellung gezeigt, die jedoch außer dem Kraftaufnehmer 1 noch weitere Bestandteile eines geotechnischen Ankersystems 2 zeigt: das Ankersystem 2 umfasst zunächst neben dem eigentlichen Anker oder Ankerstab 2a noch eine Ankermutter 2b, eine erste Ausgleichsplatte 2c sowie eine zweite Ausgleichsplatte 2d. Der Kraftaufnehmer 1 ist zwischen der bauwerkseitig anzuordnenden ersten Ausgleichsplatte 2c und der zweiten Ausgleichsplatte 2d angeordnet, wie sich insbesondere aus der in Figur 4 gezeigten Schnittdarstellung gemäß der Linie A-A in Figur 3 ergibt. Der Ankerstab 2a weist an seinem freien Ende 2e ein Gewinde (nicht gezeigt) zum Aufschrauben der Ankermutter 2b auf, um auf diese Weise die zweite Ausgleichsplatte 2d gegen den Kraftaufnehmer 1, die erste Ausgleichsplatte 2c und das Bauwerk (in Figur 4 nicht gezeigt; vergleiche Figuren 5 bis 8) zu verspannen. Die Ankermutter 2b stellt dementsprechend eine Verspannsicherung dar.

Die erste Ausgleichsplatte 2c und die zweite Ausgleichsplatte 2b sind kreisringförmig ausgebildet und weisen jeweils einen zentralen Durchbruch (nicht bezeichnet) auf, welcher Durchbruch einen Durchtritt des Ankerstabs 2a ermöglicht, wie dargestellt. Die zweite Ausgleichsplatte 2d weist an ihrer den Kraftaufnehmer 1 zugewandten Seite eine ringförmige Vertiefung (Nut) 2f auf (vergleiche Figur 4), die komplementär zu einer Außenkontur der Kraftaufnehmer-Halbschalen 1aa, 1ab; 1ba, 1bb ausgebildet ist, sodass der Kraftaufnehmer 1 mit seinen Einzelteilen in diesem Bereich in radialer Richtung bezogen auf den Ankerstab 2a formschlüssig in der genannten Vertiefung 2f gehalten ist. In Figur 4 bezeichnet weiterhin Bezugszeichen L die Längsachse des Ankers 2 bzw. des Ankerstabs 2a.

Gemäß der Ausgestaltung in Figur 3 ist die zweite Ausgleichsplatte 2d über ihren Umfang an entsprechenden Trennstellen TS1, TS2 in wenigstens zwei separate Ringteilsektoren 2da, 2db, unterteilt, welche Ringteilsektoren 2da, 2db sich jeweils über einen gleichen Umfangswinkelbereich von 180° erstrecken. Die vorstehend erwähnte Vertiefung 2f (Figur 4) ist entsprechend durch Vertiefungen der Ringteilsektoren 2da, 2db gebildet. Gemäß Figur 3 ist eine Trennebene des Kraftaufnehmers 1 um 90° gegenüber einer Trennebene der zweiten Ausgleichsplatte 2d verdreht angeordnet. Auf diese Weise können Flansch-Überstände oder radiale Flanschen 2g, die im Bereich der Trennstellen TS1, TS2 an den Ringteilsektoren 2da, 2db vorhanden sind, für einen mechanischen Schutz der genannten Anschlussstellen 1g, 1h des Kraftaufnehmers 1 sorgen. Die beiden Ringteilsektoren 2da, 2db sind mittels einer Anzahl von Verbindungsmitteln, vorzugsweise Schraubmitteln (Schraubbolzen 2h, Muttern 2i), lösbar miteinander verbunden, um die zweite Ausgleichsplatte 2d zu bilden. Zu diesem Zweck sind im Bereich der Flansch-Überstände 2g paarweise fluchtende Durchbrüche (nicht bezeichnet) vorgesehen.

In den Figuren 5 bis 8 ist ein möglicher Verfahrensablauf dargestellt, wie er sich ergibt, wenn bei einem bereits installierten geotechnischen Ankersystem 2 gemäß den Figuren 3 und 4 der Kraftaufnehmer 1 beispielsweise zu Wartungszwecken entnommen oder ausgetauscht werden soll.

Figur 5 zeigt das geotechnische Ankersystem 2 gemäß den Figuren 3 und 4 in einer seitlichen Ansicht in seinem Montagezustand mit Verspannung gegen ein Bauwerk 3, welches Bauwerk 3 eine Bohrung 3a zum Einbringen des Ankerstabs 2a aufweist.

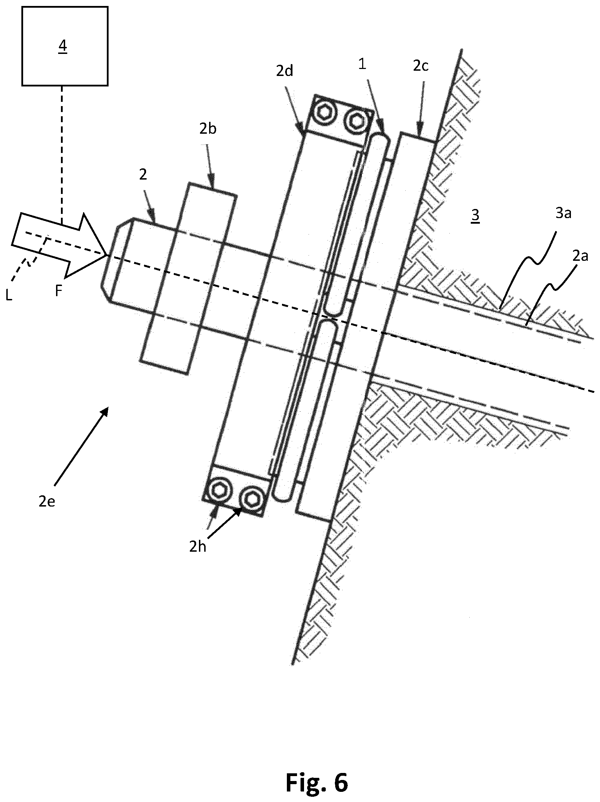

Gemäß Figur 6 wurde ausgehend von der Darstellung in Figur 5 die Ankermutter 2b gelockert. Der Pfeil F symbolisiert eine auf den Ankerstab 2a aufgebrachte Haltekraft, die dafür sorgt, dass sich trotz Lockerung der Verspannsicherung der Ankerstab 2a nicht relativ zu dem Bauwerk 3 bewegt. Dies kann mittels einer beliebigen, hierfür geeigneten Haltevorrichtung erreicht werden, die bei Bezugszeichen 4 nur symbolisch dargestellt ist.

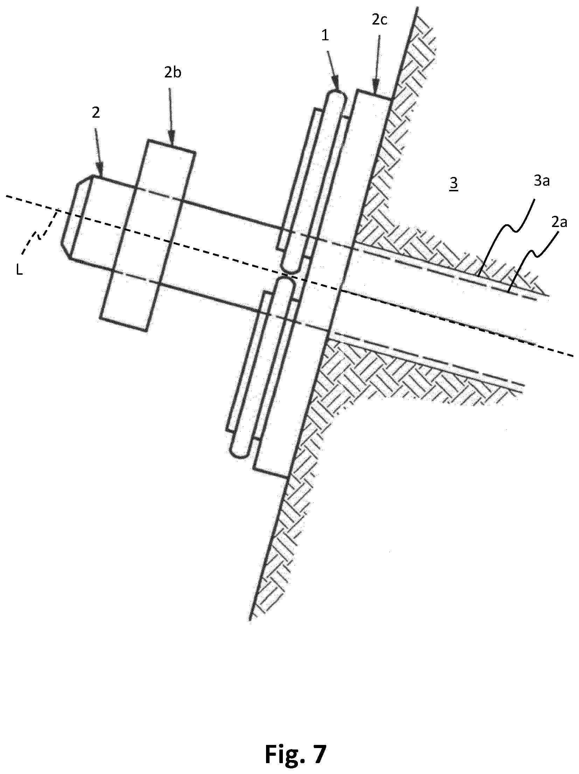

In Figur 7 ist dargestellt, welcher Zustand sich ergibt, nachdem die zweigeteilte zweite Ausgleichsplatte 2d (nach Lösen der Schraubmittel) von dem Ankerstab 2a entfernt wurde. Insbesondere falls die zweite Ausgleichsplatte 2d nicht mehrteilig ausgebildet ist, kann sie auch einfach in Richtung der gelockerten Ankermutter 2b von dem Kraftaufnehmer 1 abgehoben werden (nicht gezeigt).

Nun liegt der mehrteilige Kraftaufnehmer 1 frei und kann - gegebenenfalls nach Entfernen bzw. Trennen der Fluidleitung 1d (vergleiche Figuren 1 bis 4) - von dem Ankerstab 2a abgenommen werden.

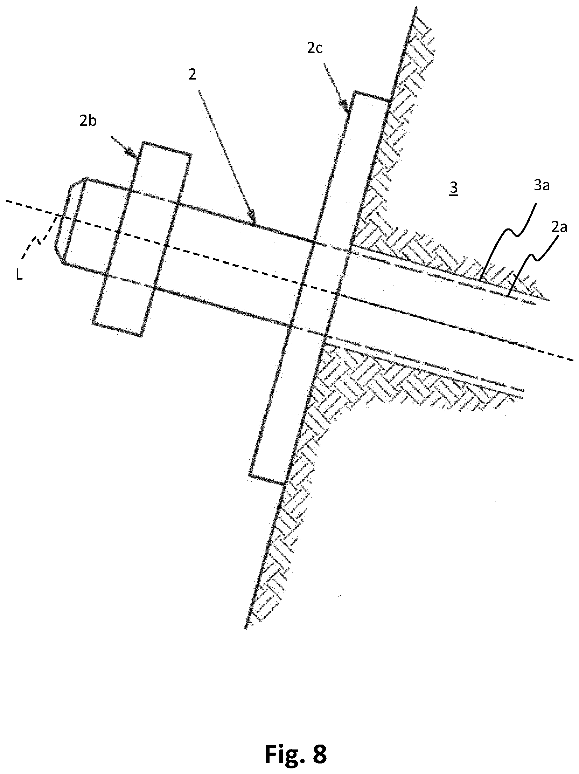

Dieser Zustand ist in Figur 8 gezeigt, in dem nur noch die Ankermutter 2b und die erste Ausgleichsplatte 2c auf dem Ankerstab 2a verbleiben.

Die Haltekraft liegt in den Figuren 7 und 8 weiterhin an den Ankerstab 2a an, was aus Gründen der Übersichtlichkeit nicht dargestellt ist.

Die anschließende Wiederherstellung des kompletten geotechnischen Ankersystems 2 erfolgt bevorzugt in umgekehrter Reihenfolge.

## Patentansprüche

1. Kraftaufnehmer (1) für einen geotechnischen Anker (2a), wobei der Kraftaufnehmer (1) ringförmig ausgebildet und dazu bestimmt und geeignet ist, den Anker (2a) in einer Ebene senkrecht zu einer Längsachse (L) des Ankers (2a) zu umgeben, **dadurch gekennzeichnet, dass** der Kraftaufnehmer (1) über seinen Umfang in wenigstens zwei separate, in Form von Ringsektoren ausgebildete Kraftaufnehmerteile (1a, 1b) unterteilt ist.

2. Kraftaufnehmer (1) nach Anspruch 1, **dadurch gekennzeichnet, dass** genau zwei Kraftaufnehmerteile (1a, 1b) vorhanden sind, die sich vorzugsweise jeweils über einen Umfangswinkel von 180 Grad erstrecken.

3. Kraftaufnehmer (1) nach Anspruch 1 oder 2, **dadurch gekennzeichnet, dass** zumindest einige der Kraftaufnehmerteile (1a, 1b), bevorzugt alle Kraftaufnehmerteile (1a, 1b), messtechnisch miteinander in Wirkverbindung stehen, wobei wenigstens ein Druckumsetzer (1e) und pro Kraftaufnehmerteil (1a, 1b) wenigstens eine Messeinheit vorgesehen ist, wobei die Messeinheiten der Kraftaufnehmerteile (1a, 1b) über wenigstens eine Fluidleitung (1d) miteinander und mit dem Druckumsetzer (1e) in Wirkverbindung stehen.

4. Kraftaufnehmer (1) nach Anspruch 3, **dadurch gekennzeichnet, dass** die Messeinheiten ein Fluid enthalten, dessen Fluiddruck mittels des Druckumsetzers (1e) erfassbar ist.

5. Kraftaufnehmer (1) nach Anspruch 3 oder 4, **dadurch gekennzeichnet, dass** die Fluidleitung (1d) an einer jeweiligen Anschlussstelle (1g, 1h) radial nach außen aus dem betreffenden Kraftaufnehmerteil (1a, 1b) herausgeführt ist und sich vorzugsweise zwischen zwei Anschlussstellen (1g, 1h) in einem gleichbleibenden radialen Abstand über einen Abschnitt des Umfangs des Kraftaufnehmers (1) erstreckt.

6. Kraftaufnehmer (1) nach Anspruch 1 oder 2, **gekennzeichnet durch** wenigstens eine Messeinheit pro Kraftaufnehmerteil (1a, 1b), welche Messeinheiten dazu ausgebildet sind, eine Druckeinwirkung auf die betreffende Messeinheit in Form einer Dehnung messtechnisch zu erfassen.

7. Geotechnisches Ankersystem (2) mit einem Anker (2a), der in einen Baukörper oder einen Untergrund einbringbar ist, so dass der Anker (22) mit einem Ende aus dem Baukörper oder Untergrund herausragt, und mit einem Kraftaufnehmer (1) nach einem der vorangehenden Ansprüche, **dadurch gekennzeichnet, dass** der Kraftaufnehmer (1) in seinem Montagezustand den Anker (2a) in einer Ebene senkrecht zu einer Längsachse (L) des Ankers (2a) mit seinen in Form von Ringsektoren ausgebildeten Kraftaufnehmerteilen (1a, 1b) im Wesentlichen vollumfänglich umgibt.

8. Geotechnisches Ankersystem (2) nach Anspruch 7, **dadurch gekennzeichnet, dass** ein Außendurchmesser des Ankers (2a) im Wesentlichen einem lichten Innendurchmesser eines zentralen Durchbruchs (1c) des ringförmigen Kraftaufnehmers (1) entspricht.

9. Geotechnisches Ankersystem (2) nach Anspruch 7 oder 8, **gekennzeichnet durch** wenigstens eine auf der Seite des Baukörpers oder des Untergrunds angeordnete oder anzuordnende erste Ausgleichsplatte (2c) und wenigstens eine zweite Ausgleichsplatte (2d), welche erste Ausgleichsplatte (2c) und/oder welche zweite Ausgleichsplatte (2d) vorzugsweise ringförmig ausgebildet ist und jeweils einen zentralen Durchlass zur Aufnahme des Ankers (2a) aufweist, bei dem in dem Montagezustand der Kraftaufnehmer (1) zwischen der ersten Ausgleichsplatte (2c) und der zweiten Ausgleichsplatte (2d) angeordnet ist.

10. Geotechnisches Ankersystem (2) nach Anspruch 9, **dadurch gekennzeichnet, dass** wenigstens eine der Ausgleichsplatten (2c, 2d), vorzugsweise die zweite Ausgleichsplatte (2d), auf ihrer dem Kraftaufnehmer (1) zugewandten oder zuzuwendenden Seite eine Formschlussstruktur (2f) aufweist, welche Formschlussstruktur (2f) in dem Montagezustand mit dem Kraftaufnehmer (1) formschlüssig zusammenwirkt.

11. Geotechnisches Ankersystem (1) nach Anspruch 10, **dadurch gekennzeichnet, dass** der Formschluss in radialer Richtung bezogen auf die Längsachse (L) des Ankers (2a) wirksam ist.

12. Geotechnisches Ankersystem (2) nach Anspruch 10 oder 11, **dadurch gekennzeichnet, dass** die Formschlussstruktur als eine ringförmige Vertiefung (2f) in der betreffenden Seite der entsprechenden Ausgleichsplatte (2d) ausgebildet ist, welche Vertiefung (2f) in dem Montagezustand mit einem komplementären Vorsprung an dem Kraftaufnehmer (1), vorzugsweise an jedem der Kraftaufnehmerteile (1a, 1b), zusammenwirkt, oder umgekehrt.

13. Geotechnisches Ankersystem (2) nach einem der Ansprüche 10 bis 12, **dadurch gekennzeichnet, dass** die wenigstens eine der Ausgleichsplatten (2d), vorzugsweise die zweite Ausgleichsplatte (2d), über ihren Umfang an entsprechenden Trennstellen (TS1, TS2) in wenigstens zwei separate Teilsektoren (2da, 2db), vorzugsweise Ringteilsektoren, unterteilt ist, welche Teilsektoren (2da, 2db) sich vorzugsweise über einen gleichen Umfangswinkelbereich erstrecken.

14. Geotechnisches Ankersystem (2) nach Anspruch 13, **dadurch gekennzeichnet, dass** die beiden Teilsektoren (2da, 2db) mittels einer Anzahl von Verbindungsmitteln (2h, 2i), vorzugsweise Schraubmitteln, lösbar miteinander verbindbar sind, um die wenigstens eine der Ausgleichsplatten (2d) zu bilden.

15. Geotechnisches Ankersystem (2) nach Anspruch 13 oder 14, **dadurch gekennzeichnet, dass** wenigstens einige der Trennstellen (TS1, TS2) in dem Montagezustand in ihrer Umfangsposition mit jeweils einer Anschlussstelle (1g, 1h) der Fluidleitung (1d) an einem betreffenden Kraftaufnehmerteil (1a, 1b) zusammenfällt.

## Claims

1. Force transducer (1) for a geotechnical anchor (2a), the force transducer (1) being annular and being intended and suitable for surrounding the anchor (2a) in a plane perpendicular to a longitudinal axis (L) of the anchor (2a), **characterized in that** the force transducer (1) is subdivided over its circumference into at least two separate force transducer parts (1a, 1b) in the form of ring sectors.

2. Force transducer (1) according to claim 1, **characterized in that** exactly two force transducer parts (1a, 1b) are present, each preferably extending over a circumferential angle of 180 degrees.

3. Force transducer (1) according to claim 1 or 2, **characterized in that** at least some of the force transducer parts (1a, 1b), preferably all force transducer parts (1a, 1b), are operatively connected to each other for measurement purposes, at least one measuring unit per force transducer part (1a, 1b) and at least one pressure transducer (1e) being provided, the measuring units of the force transducer parts (1a, 1b) being operatively connected to each other and to the pressure transducer (1e) via at least one fluid line (1d).

4. Force transducer (1) according to claim 3, **characterized in that** the measuring units contain a fluid of which the fluid pressure is detectable by means of the pressure transducer (1e).

5. Force transducer (1) according to claim 3 or 4, **characterized in that** the fluid line (1d), at respective connection points (1g, 1h), is led radially outward from the relevant force transducer part (1a, 1b) and preferably extends over a portion of the circumference of the force transducer (1) between two connection points (1g, 1h) at a constant radial distance.

6. Force transducer (1) according to claim 1 or 2, **characterized by** at least one measuring unit per force transducer part (1a, 1b), which measuring units are designed to measure a pressure effect on the relevant measuring unit in the form of a strain.

7. Geotechnical anchor system (2) comprising an anchor (2a) insertable into a structure or subsoil such that one end of the anchor (22) protrudes from the structure or subsoil and comprising a force transducer (1) according to any of the preceding claims, **characterized in that** the force transducer (1) in its assembly state, by way of the force transducer parts (1a, 1b) thereof in the form of ring sectors, substantially surrounds the entire circumference of the anchor (2a) in a plane perpendicular to a longitudinal axis (L) of the anchor (2a).

8. Geotechnical anchor system (2) according to claim 7,
**characterized in that** an outer diameter of the anchor (2a) substantially corresponds to a clear inner diameter of a central aperture (1c) of the annular force transducer (1).

9. Geotechnical anchor system (2) according to claim 7 or 8, **characterized by** at least one first compensating plate (2c) arranged or to be arranged on the side of the structure or subsoil and at least one second compensating plate (2d), which first compensating plate (2c) and/or which second compensating plate (2d) is preferably annular and in each case has a central opening for receiving the anchor (2a), at which in the assembly state the force transducer (1) is arranged between the first compensating plate (2c) and the second compensating plate (2d).

10. Geotechnical anchor system (2) according to claim 9,
**characterized in that** at least one of the compensating plates (2c, 2d), preferably the second compensating plate (2d), has a form-fitting structure (2f) on the side thereof facing or to face the force transducer (1), which form-fitting structure (2f) in the assembly state interacts with the force transducer (1) in a form-fitting manner.

11. Geotechnical anchor system (1) according to claim 10,
**characterized in that** the form fit is effective in the radial direction with respect to the longitudinal axis (L) of the anchor (2a).

12. Geotechnical anchor system (2) according to claim 10 or 11, **characterized in that** the form-fitting structure is designed as an annular recess (2f) in the relevant side of the corresponding compensating plate (2d), which recess (2f) in the assembly state interacts with a complementary projection on the force transducer (1), preferably on each of the force transducer parts (1a, 1b), or vice versa.

13. Geotechnical anchor system (2) according to any of claims 10 to 12, **characterized in that** the at least one of the compensating plates (2d), preferably the second compensating plate (2d), is subdivided over its circumference at corresponding separation points (TS1, TS2) into at least two separate subsectors (2da, 2db), preferably ring subsectors, which subsectors (2da, 2db) preferably extend over an equal circumferential angle range.

14. Geotechnical anchor system (2) according to claim 13,
**characterized in that** the two subsectors (2da, 2db) are detachably connectable to each other by means of a number of connecting means (2h, 2i), preferably screw means, in order to form the at least one of the compensating plates (2d).

15. Geotechnical anchor system (2) according to claim 13 or 14, **characterized in that** at least some of the separation points (TS1, TS2) in the assembly state each coincide in their circumferential position with one connection point (1g, 1h) of the fluid line (1d) to a relevant force transducer part (1a, 1b).

## Revendications

1. Capteur de force (1) pour un ancrage (2a) géotechnique, dans lequel le capteur de force (1) est conçu sous la forme d'un anneau et est destiné et apte à entourer l'ancrage (2a) dans un plan perpendiculaire à un axe longitudinal (L) de l'ancrage (2a), **caractérisé en ce que** le capteur de force (1) est divisé sur sa périphérie en au moins deux éléments de capteur de force (1a, 1b) distincts, conçus sous forme de secteurs annulaires.

2. Capteur de force (1) selon la revendication 1,
**caractérisé en ce qu'**exactement deux éléments de capteur de force (1a, 1b) sont prévus, lesquels s'étendent de préférence respectivement sur un angle périphérique de 180 degrés.

3. Capteur de force (1) selon la revendication 1 ou 2,
**caractérisé en ce qu'**au moins quelques-uns des éléments de capteur de force (1a, 1b), de préférence tous les éléments de capteur de force (1a, 1b), sont en liaison active entre eux du point de vue de la technique de mesure, dans lequel au moins un convertisseur de pression (1e) est prévu et au moins une unité de mesure est prévue par élément de capteur de force (1a, 1b), dans lequel les unités de mesure des éléments de capteur de force (1a, 1b) sont en liaison active entre elles et avec le convertisseur de pression (1e) par l'intermédiaire d'au moins une conduite de fluide (1d).

4. Capteur de force (1) selon la revendication 3, **caractérisé en ce que** les unités de mesure contiennent un fluide dont la pression de fluide peut être détectée à l'aide du convertisseur de pression (1e).

5. Capteur de force (1) selon la revendication 3 ou 4, **caractérisé en ce que** la conduite de fluide (1d) sort, radialement vers l'extérieur, de l'élément de capteur de force (1a, 1b) concerné en un point de raccordement (1g, 1h) respectif et s'étend de préférence entre deux points de raccordement (1g, 1h) à une distance radiale constante sur une section de la périphérie du capteur de force (1).

6. Capteur de force (1) selon la revendication 1 ou 2, **caractérisé par** au moins une unité de mesure par élément de capteur de force (1a, 1b), lesquelles unités de mesure sont configurées pour détecter, en utilisant une technique de mesure, une action de pression sur l'unité de mesure concernée sous la forme d'un allongement.

7. Système d'ancrage géotechnique (2) comportant un ancrage (2a) qui peut être introduit dans un corps de construction ou un sous-sol, de sorte que l'ancrage (22) dépasse, par une extrémité, du corps de construction ou du sous-sol, et comportant un capteur de force (1) selon l'une des revendications précédentes, **caractérisé en ce que** le capteur de force (1), dans son état monté, entoure sensiblement entièrement l'ancrage (2a) dans un plan perpendiculaire à un axe longitudinal (L) de l'ancrage (2a) avec ses éléments de capteur de force (1a, 1b) conçus sous la forme de secteurs annulaires.

8. Système d'ancrage géotechnique (2) selon la revendication 7, **caractérisé en ce qu'**un diamètre extérieur de l'ancrage (2a) correspond sensiblement à un diamètre intérieur libre d'une ouverture centrale (1c) du capteur de force (1) annulaire.

9. Système d'ancrage géotechnique (2) selon la revendication 7 ou 8, **caractérisé par** au moins une première plaque de compensation (2c) disposée ou à disposer sur le côté du corps de construction ou du sous-sol et au moins une seconde plaque de compensation (2d), laquelle première plaque de compensation (2c) et/ou laquelle seconde plaque de compensation (2d) sont de préférence conçues sous forme annulaire et présentent respectivement un passage central pour la réception de l'ancrage (2a), dans lequel, à l'état monté, le capteur de force (1) est disposé entre la première plaque de compensation (2c) et la seconde plaque de compensation (2d).

10. Système d'ancrage géotechnique (2) selon la revendication 9,
**caractérisé en ce qu'**au moins l'une des plaques de compensation (2c, 2d), de préférence la seconde plaque de compensation (2d), présente, sur son côté tourné ou à tourner vers le capteur de force (1), une structure de liaison par complémentarité de forme (2f), laquelle structure de liaison par complémentarité de forme (2f) coopère par complémentarité de forme avec le capteur de force (1) à l'état monté.

11. Système d'ancrage géotechnique (1) selon la revendication 10, **caractérisé en ce que** la liaison par complémentarité de forme est efficace dans la direction radiale par rapport à l'axe longitudinal (L) de l'ancrage (2a).

12. Système d'ancrage géotechnique (2) selon la revendication 10 ou 11, **caractérisé en ce que** la structure de liaison par complémentarité de forme est formée comme un évidement (2f) annulaire dans le côté concerné de la plaque de compensation (2d) correspondante, lequel évidement (2f), dans l'état monté, coopère avec une saillie complémentaire sur le capteur de force (1), de préférence sur chacun des éléments de capteur de force (1a, 1b), ou vice versa.

13. Système d'ancrage géotechnique (2) selon l'une des revendications 10 à 12, **caractérisé en ce que** l'au moins une des plaques de compensation (2d), de préférence la seconde plaque de compensation (2d), est divisée, sur sa périphérie en des points de séparation (TS1, TS2) correspondants, en au moins deux sous-secteurs (2da, 2db) distincts, de préférence des sous-secteurs annulaires, lesquels sous-secteurs (2da, 2db) s'étendent de préférence sur une même plage angulaire périphérique.

14. Système d'ancrage géotechnique (2) selon la revendication 13, **caractérisé en ce que** les deux sous-secteurs (2da, 2db) peuvent être reliés l'un à l'autre de manière amovible à l'aide d'un certain nombre de moyens de liaison (2h, 2i), de préférence des moyens de vissage, afin de former l'au moins une des plaques de compensation (2d).

15. Système d'ancrage géotechnique (2) selon la revendication 13 ou 14, **caractérisé en ce qu'**au moins certains des points de séparation (TS1, TS2) coïncident, dans l'état monté dans leur position périphérique, avec respectivement un point de raccordement (1g, 1h) de la conduite de fluide (1d) sur un élément de capteur de force (1a, 1b) concerné.
